**Europäisches Patentamt**

**European Patent Office**

**Office européen des brevets**

(19)

(11) Veröffentlichungsnummer: **0 003 608**
**B1**

(12) **EUROPÄISCHE PATENTSCHRIFT**

(45) Veröffentlichungstag der Patentschrift: **29.04.81**

(51) Int. Cl.³: **B 60 R 1/06**

(21) Anmeldenummer: **79100403.9**

(22) Anmeldetag: **12.02.79**

(54) **Aussenrückblickspiegel.**

(30) Priorität: **15.02.78 DE 2806288**
**25.02.78 DE 2808162**

(43) Veröffentlichungstag der Anmeldung:
**22.08.79 Patentblatt 79/17**

(45) Bekanntmachung des Hinweises auf die Patenterteilung:
**29.04.81 Patentblatt 81/17**

(84) Benannte Vertragsstaaten:
**BE CH DE FR GB IT LU NL SE**

(56) Entgegenhaltungen:
**DE - A - 2 256 230**
**DE - A - 2 436 339**
**DE - A - 2 546 759**
**DE - C - 915 538**
**DE - C - 1 143 116**
**DE - U - 7 215 400**
**DE - U - 7 729 371**
**FR - A - 2 180 177**

(73) Patentinhaber: **Metallwerk FRESE GmbH**
**Moltkestrasse 25**
**D-5653 Leichlingen (DE)**

(72) Erfinder: **Otting, Horst**
**Moltkestrasse 34**
**D-5653 Leichlingen 1 (DE)**
Erfinder: **Peschla, Gustav**
**Auf der Ohmer 11**
**D-5090 Leverkusen-3 (DE)**
Erfinder: **Reif, Friedhelm**
**Sperberstrasse 16**
**D-5653 Leichlingen 1 (DE)**

(74) Vertreter: **Gille, Christian, Dipl.-Ing. et al,**
**Redies, Redies, Türk & Gille, Patentanwälte**
**Brucknerstrasse 20**
**D-4000 Düsseldorf 13 (DE)**

Courier Press, Leamington Spa, England.

## Außenrückblickspiegel

Die Erfindung betrifft einen insbesondere für Kraftfahrzeuge bestimmten Außenrückblickspiegel mit einem Gehäuse für eine darin untergebrachte verstellbare Spiegelscheibe und einer Halterung zum Anbringen am Fahrzeug.

Moderne Außenrückblickspiegel, insbesondere mit im Gehäuse verstellbar angeordneter Spiegelscheibe, werden an der Außenseite des Kraftfahrzeuges, insbesondere bei PKW, derart befestigt, daß das Gehäuse normalerweise seine Lage nicht verändern kann. Es ist jedoch erforderlich, daß ein derartiger Außenrückblickspiegel bei Unfällen oder, wenn aus sonstigen Gründen stärkere Stöße auf sein Gehäuse ausgeübt werden, abklappen kann, bevor Beschädigungen an der Fahrzeugkarosserie auftreten oder Personen verletzt werden können. Um dies zu erreichen, muß der Außenrüblickspiegel um eine etwa senkrecht verlaufende Achse verschwenkbar sein, wenn eine bestimmte Stoßkraft auf ihn ausgeübt wird, während andererseits bei normalen Betrieb ein Verschwenken ausgeschlossen sein soll.

Bei einem diese Forderung erfüllenden bekannten Außenrückblickspiegel (DE—A—25 46 759) ist das die Spiegelscheibe aufnehmende Gehäuse über ein zwei parallele Gelenkachsen aufweisendes doppeltes Gelenk mit der Halterung zum Anbringen am Fahrzeug verbunden, so daß sich jeweils eine der beiden Gelenkachsen unter Einwirkung einer auf das Gehäuse ausgeübten Stoßkraft vom Gelenk lösen und das Gehäuse um die nicht gelöste andere Gelenkachse verschwenken kann. Da das Gehäuse über federnd ausgebildete Gelenkpfannen mit den Gelenkachsen verbunden ist, besteht die Gefahr, daß sich beide Gelenkachsen von den ihnen zugehörigen Scharnieren lösen und der Außenrückblickspiegel abfällt. Auch kann man den Außenrückblickspiegel bewußt abbauen, indem man ihn von den Gelenkachsen abzieht, so daß Diebstähle nicht verhindert werden können.

Ähnliche Nachteile weist ein anderer bekannter Außenrückblickspiegel dieser Art (DE—U—77 29 371) auf, weil auch in diesem Falle unabsichtlich beide Gelenkachsen gleichzeitig gelöst werden können und das Spiegelgehäuse dann nur noch über die Stelleinrichtung mit der Halterung verbunden bleibt, was zwangsläufig zu Beschädigungen führen muß. Weitere Beispiele für mit derartigen Nachteilen behaftete Außenrückblickspiegel sind aus der DE—A—24 36 339, bei der die Gelenkachsen von jeweils zwei Kugelgelenken gebildet sind und nicht parallel zueinander verlaufen, und der DE—U—72 15 400, bei der die am Spiegelgehäuse angebrachten Gelenkachsen über unter Federdruck stehende Kugeln in Öffnungen der Halterung einschnappen können, bekannt. Wiederum ist nicht zu vermeiden, daß sich das Spiegelgehäuse unbeabsichtigt von der Halterung löst.

Bei Außenrückblickspiegeln mit in einem Gehäuse untergebrachter verstellbarer Spiegelscheibe ist es ferner bekannt, den Spalt zwischen dem Rand der Spiegelscheibe und der Innenwand der sie aufnehmenden Öffnung des Gehäuses abzudichten, und zwar mittels einer am Rand der Spiegelscheibe angebrachten Dichtung, die mit der Innenwand des Gehäuses zusammenwirkt (DE—C—1 143 116, DE—C—915 538 und FR—A—2 180 177). Die Anbringung der Dichtung an der Spiegelscheibe ist jedoch aufwendig und dementsprechend kostspielig. Deshalb wird nach einem anderen bekannten Vorschlag die Spiegelscheibe auf einem an ihrer Rückseite befestigten flexiblen Kragen der Gehäusewand angeordnet (DE—A—2 256 230). Die Anbringung eines derartigen flexiblen Kragens am Gehäuse verursacht aber ebenfalls verhältnismäßig hohe Kosten. Außerdem kann die Spiegelscheibe sich ungewollt verstellen und vibrieren.

Der Erfindung liegt die Aufgabe zugrunde, einen abklappbaren Außenrückblickspiegel für Kraftfahrzeuge oder sonstige Fahrzeuge mit einfacher und robuster Konstruktion zu schaffen, dessen abklappbares Spiegelgehäuse sich nicht vollständig von der zum Anbringen am Fahrzeug bestimmten Halterung lösen kann und bei dem die verstellbare Spiegelscheibe mit Sicherheit in der jeweils eingestellten Position verbleibt und praktisch nicht vibriert und ein Eindringen von Feuchtigkeit wie Wasser und Schmutz in das Gehäuse um den Rand der Spiegelscheibe herum verhindert wird.

Diese Aufgabe wird mit den in den Ansprüchen gekennzeichneten Merkmalen gelöst.

Die durch die Erfindung erreichten Vorteile sind im wesentlichen darin zu sehen, daß der Außenrückblickspiegel unter Einwirkung normaler Belastungen wie der beim Fahren auftretenden Erschütterungen und von geringeren Kräften, wie sie beispielsweise beim Waschen und insbesondere in einer automatischen Waschanlage auftreten, in seiner normalen Lage verbleibt und das Gelenk nur dann seine Funktion erfüllt, wenn stärkere Stöße auf das Gehäuse ausgeübt werden. Die Spiegelscheibe wird in der jeweils eingestellten Position von der sie umschließenden Dichtung festgehalten und vibriert nicht unter den Erschütterungen des laufenden Motors des fahrenden Fahrzeuges. Die Gelenkachsen sind dabei so ausgebildet, daß jeweils nur eine Gelenkachse von dem ihr zugehörigen Scharnier gelöst werden kann, da der Scharnierkörper so ausgebildet ist, daß jeweils nur eine der Gelenkachsen unter Überwindung einer bestimmten Mindestkraft aus deren Scharnier gelöst werden kann, während durch die sich daran anschließende Schwenkbewegung des Spiegelgehäuses die andere Gelenkachse gegen ein Lösen aus deren Scharnier gesichert wird. Das Spiegelgehäuse kann somit nicht von der Halterung abfallen oder von der Halterung beispielsweise von Dieben abgebaut werden.

Der als Dichtung ausgebildete Rand der Gehäuseöffnung erfüllt eine doppelte Funktion. Einmal sorgt er für eine Abdichtung um die verstellbare Spiegelscheibe herum und zum anderen für eine vibrationshemmende Arretierung der Spiegelscheibe in der jeweils eingestellten Lage. Die Reibung zwischen Dichtung und Spiegelscheibe kann problemlos so eingestellt werden, daß die Spiegelscheibe nur mit einer bestimmten von Hand oder mittels mechanischer oder elektromotorischer Fernbedienung aufgebrachte Mindestkraft verstellt werden kann und sich somit nicht aufgrund der beim Fahren oder Abklappen des Spiegelgehäuses auftretenden Erschütterungen oder sonstigen normalen äußeren Einflüssen unerwünscht aus ihrer eingestellten Lage verstellt.

Ist die Spiegelscheibe mit einer sie aufnehmenden umlaufenden Fassung versehen, wirken auf sie beim Verstellen keine Querkräfte ein, die zu einem Bruch des Spiegelglases führen könnten.

Der erfindungsgemäße Außenrückblickspiegel besteht aus wenigen Teilen und läßt sich einfach und sicher zusammenbauen. Das Spiegelgehäuse kann bei Überbelastung um jeweils eine der beiden Gelenkachsen nach vorne oder hinten abklappen, bleibt aber stets fest mit der Halterung verbunden, so daß es nicht abfallen oder abgerissen werden kann. Die Spiegelscheibe verstellt sich nicht ungewollt, selbst wenn das Spiegelgehäuse abgeklappt worden ist und danach in seine normale Ausgangsstellung zurückgestellt wurde.

In der Zeichnung sind Ausführungsbeispiele eines erfindungsgemäß ausgebildeten Außenrückblickspiegels dargestellt, und zwar zeigt.

Fig. 1 eine schaubildliche Vorderansicht des aus einem Spiegelgehäuse mit eingesetzter verstellbarer Spiegelscheibe und einem gelenkig damit verbundenen Fuß bestehenden Außenrückblickspiegels,

Fig. 2 eine schaubildliche Ansicht einer ersten Ausführungsform des die Verbindung zwischen Spiegelgehäuse und Fuß herstellenden, nach der einen oder anderen Seite abklappbaren scharnierartigen Gelenkes,

Fig. 3 eine Draufsicht auf das einseitig abgeklappte Gelenk aus Fig. 2,

Fig. 4 einen horizontalen Schnitt durch den Außenrückblickspiegel gemäß Linie IV—IV aus Fig. 1, woraus eine abgewendete Ausführungsform des scharnierartigen Gelenkes zu erkennen ist,

Fig. 5 eine Explosionsdarstellung des Gelenkes der Ausführungsform gemäß Fig. 4,

Fig. 6 eine Vorderansicht des Außenrückblickspiegels auf die die Öffnung zur Aufnahme der Spiegelscheibe enthaltende Seite,

Fig. 7 einen horizontalen Querschnitt nach Linie VII—VII aus Fig. 6,

Fig. 8 einen senkrechten Schnitt nach Linie VIII—VIII aus Fig. 6 und

Fig. 9 eine Einzelheit einer im Querschnitt abgewandelten Ausführungsform der Dichtung.

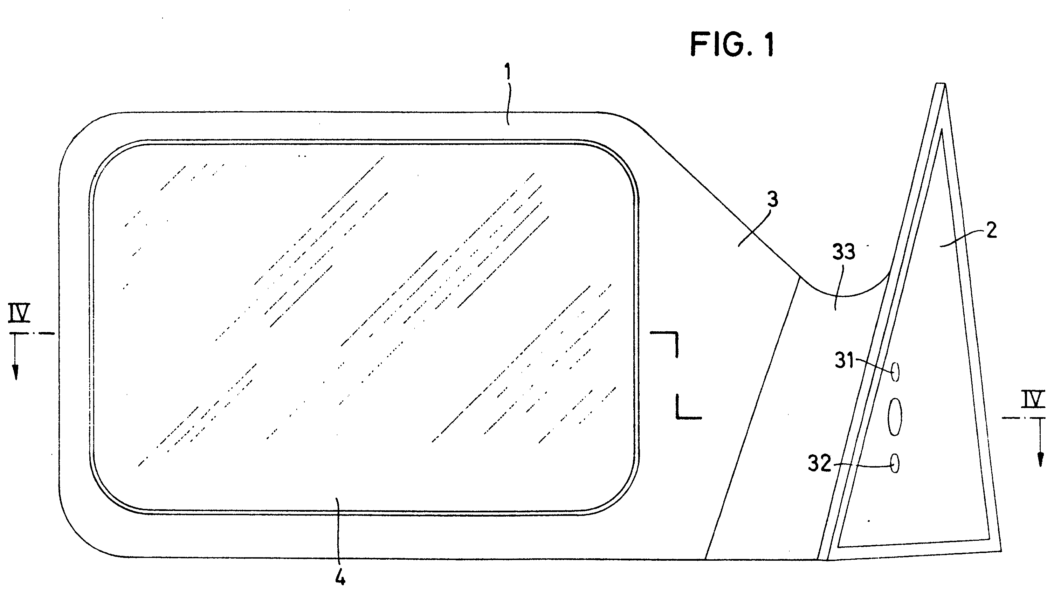

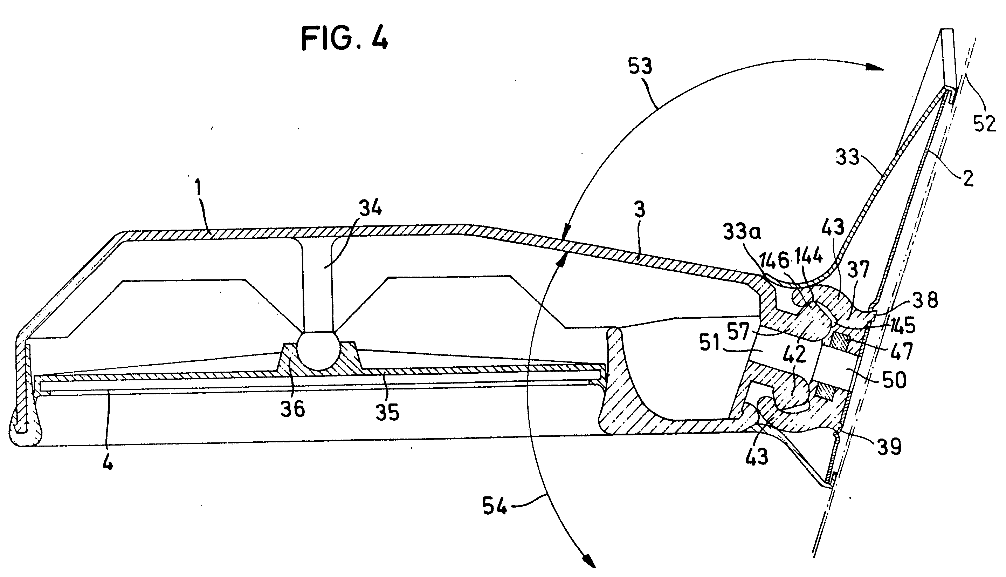

Der Außenrückblickspiegel weist gemäß Fig. 1 bis 5 ein Gehäuse 1 und eine Fußplatte 2 auf, die in nachstehend erläuterter Weise gelenkig miteinander verbunden sind. Die Fußplatte 2 kann in nicht näher dargestellter Weise an der Karosserie eines Fahrzeuges befestigt werden, zu welchem Zweck sie Durchgangslöcher 31 und 32 enthält. Den Übergang vom Gehäuse 1 zur Fußplatte 2 bildet ein verengter Hals 3, der in eine manschettenartig ausgebildete und an der Fußplatte 2 befestigte Kappe 33 aus weichelastischem Material hineinragt, wie insbesondere Fig. 4 zeigt.

In das Gehäuse ist eine Spiegelscheibe 4 eingesetzt, die gemäß Fig. 4 auf einem Kugelkopfzapfen 34 mittels einer Halteplatte 35 und daran angebrachter kugelpfanne 36 innerhalb des Gehäuses verstellt werden kann.

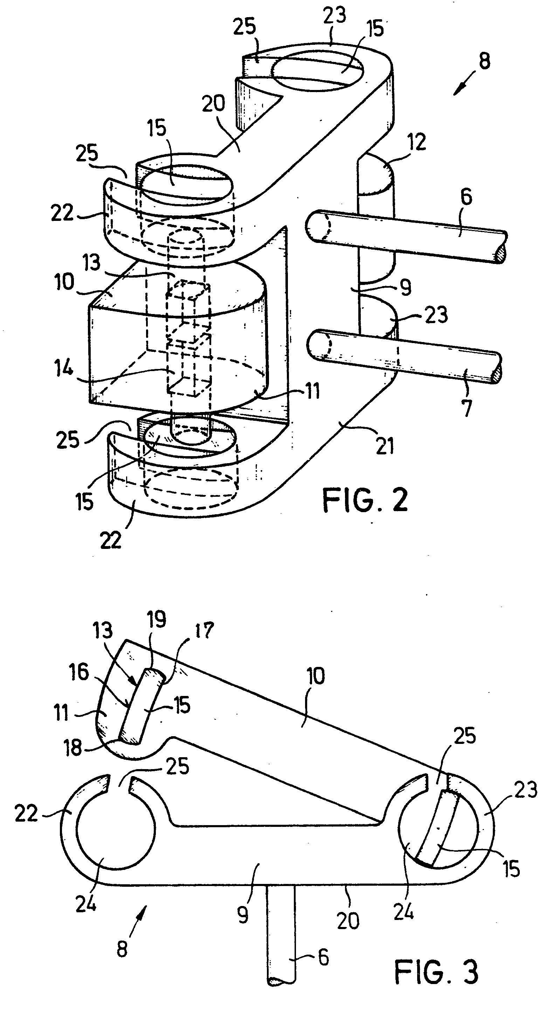

Die Verbindung zwischen dem Gehäuse 1 und der Fußplatte 2 wird von einem scharnierartigen Gelenk gebildet, wobei in Fig. 2 und 3 eine Ausführungsform dieses Gelenkes 8 dargestellt ist, dessen als Anschlüsse dienende Bolzen 6 und 7 durch die Löcher 31 und 32 der Fußplatte 2 hindurchgesteckt werden können.

Wie Fig. 2 zeigt, besteht das Gelenk 8 im wesentlichen aus einem die Bolzen 6 und 7 tragenden Scharnierkörper 9 und einem Block 10, der endständig angeformte Augen 11 und 12 aufweist, in denen jeweils eine Gelenkachse 13 drehfest angeordnet ist, die zu diesem Zweck im mittleren Bereich 14 einen rechteckigen Querschnitt aufweist.

An den beiden Enden jeder Gelenkachse 13 befindet sich jeweils ein abgeflachter Abschnitt 15, der parallel zueinander laufende gewölbte Seitenwände 16 und 17 und auf einem Kreisbogen verlaufende Stirnwände 18 und 19 aufweist.

Die Abschnitte 15 der beiden Gelenkachsen 13 sind so zueinander angeordnet, daß sie aufeinander zu gebogen, d.h. gegeneinander konvex gebogen sind.

Der Scharnierkörper 9 ist am oberen und unteren Ende jeweils mit einem balkenartigen Abschnitt 20 bzw. 21 versehen, die an ihren beiden äußeren Enden jeweils ein Auge 22 bzw. 23 aufweisen. Jedes dieser Augen enthält eine zylindrische Öffnung 24, deren Durchmesser dem Durchmesser der Abschnitte 15 der Gelenkachsen 13 zwischen deren Stirnwänden 18 und 19 entspricht. Außerdem ist jedes Auge 22 und 23 mit einem durchgehenden radialen Schlitz 25 versehen, der nach innen gebogen verläuft und eine Krümmung aufweist, die der Krümmung des betreffenden Abschnittes 15 der Gelenkachse 13 entspricht. Die Weite dieses radialen Schlitzes 25 ist der Dicke der Abschnitte 15 der Gelenkachsen 13 zwischen deren Seitenwänden 16 und 17 derart angepaßt, daß zum Hindurchführen dieser Abschnitte durch einen dieser Schlitze eine gewisse Mindestkraft aufgebracht werden muß oder dies nicht ohne besonderen Energieaufwand erfolgen kann.

In Fig. 2 ist das Gelenk 8 in seiner geschlossenen Lage dargestellt, während es in Fig. 3 aufgeschwenkt gezeigt ist, wobei die an der linken Seite befindliche Gelenkachse 13 sich aus den zylindrischen Öffnungen 24 gelöst hat, während die an der rechten Seite befindliche Gelenkachse 13 in den entsprechenden Öffnungen 24 verblieb und in dieser Lage auch nicht mehr gelöst werden kann, weil sich die Abschnitte 15 in die aus Fig. 3 ersichtliche Lage verdreht haben. Die in Fig. 3 erkennbare Position nimmt das Gelenk ein, wenn, in Fig. 3 betrachtet, von links auf das Gelenk 8 ein stärkerer Stoß oder Druck ausgeübt worden ist.

Ist das Gehäuse 1 aus der normalen Betriebsposition herausgeschwenkt worden, so kann man den Rückblickspiegel ohne weiteres dadurch wieder in die Ausgangslage zurückschwenken und den vom Scharnierkörper 9 gelösten Teil des Blockes 10 bzw. die betreffende Gelenkachse in die Öffnungen 24 hineindrücken, was ohne Zuhilfenahme von Werkzeugen möglich ist.

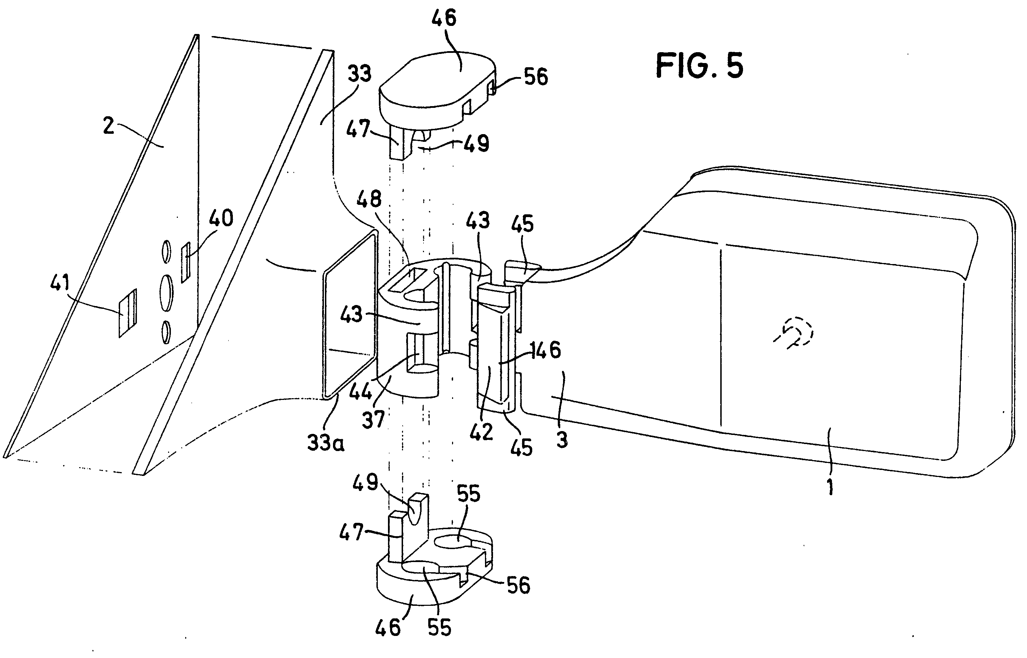

Die Ausführungsform gemäß Fig. 4 und 5 unterscheidet sich von der Ausführungsform gemäß Fig. 2 und 3 dadurch, daß der Scharnierkörper 37 mittels kleiner Füße 38 und 39, die durch entsprechende Öffnungen 40 und 41 der Fußplatte 2 gesteckt sind, auf der Fußplatte angeordnet ist und seitlich die Gelenkachsen 42 federnd übergreifende zungenartige Flanken 43 aufweist, die mit einem Ausschnitt 44 versehen sind, um die Federkraft der Flanken einstellen zu können. Am oberen und unteren Ende ist jede Gelenkachse 42 mit jeweils einem bogenförmig ausgebildeten Abschnitt 45 versehen, wobei diese Abschnitte 45 den Abschnitten 15 des Gelenkes gemäß Fig. 2 und 3 entsprechen.

Auf dem Scharnierkörper 37 ist von oben und unten jeweils ein vorzugsweise aus Metall bestehendes Abdeckstück 46 aufgesteckt, das mit einer Zunge 47 versehen ist, welches in einen entsprechenden Schlitz 48 paßt und am äußeren Ende eine halbkreisförmige Ausnehmung 49 enthält, um eine zentrale Durchgangsbohrung 50 im Scharnierkörper 37 auszusparen. Diese Durchgangsbohrung 50 fluchtet mit einer in das Gehäuse 1 führenden entsprechenden Bohrung 51. An der Innenseite der Flanken 43 befinden sich jeweils zwei Rasten 144 und 145, in die eine an der Gelenkachse ausgebildete Nase 146 je nach Lage des Spiegelgehäuses einrasten kann.

In Fig. 4 ist die Karosserie 52 eines nicht näher gezeigten Fahrzeuges angedeutet. Die Pfeile 53 und 54 deuten die Abschwenkmöglichkeiten des Gehäuses 1 an.

Die Abdeckstücke 46 enthalten an ihrer Innenseite jeweils zwei zylindrische Sacklöcher 55 mit etwa radial nach außen verlaufenden, bogenförmig ausgebildeten Schlitzen 56, um eine ähnliche Lagerung der Gelenkachsen wie bei der Ausführungsform gemäß Fig. 2 und 3 zu erhalten, jedoch mit dem Unterschied, daß die zylindrischen Öffnungen nach oben und unten abgedeckt sind.

Die Gelenkachsen 42 sind einstückig mit einem Halter 57 ausgebildet, der die Bohrung 51 enthält und seinerseits mit dem Gehäuse 1 in einem Stück hergestellt ist. Dementsprechend können alle diese Teile aus Kunststoff gespritzt sein.

Es ist erkennbar, daß das Gelenk der Ausführungsform gemäß Fig. 4 und 5 sehr kompakt und robust ist, andererseits aber einfach hergestellt und auch schnell zusammengebaut werden kann, so daß es sich gut für eine moderne Massenproduktion eignet. Die Kappe 33 aus weichelastischem Material deckt das Gelenk wenigstens in der normalen Position vollständig ab, denn sie legt sich mit ihrem äußeren Rand 33a gegen den Hals 3 des Gehäuses 1 dichtend ab.

Das Gehäuse 1 läßt sich stets nur aus einer seiner beiden Verankerungen ausrasten und lösen, denn wenn eine Gelenkachse gelöst ist, ist die andere in ihrer Lagerung so verdreht, daß sie nicht mehr gelöst werden kann. Somit kann der Spiegel ebensowenig abfallen oder gelöst wie gestohlen werden. Zum Verschiffen, ggfs. Waschen in Waschanlagen usw., kann der Spiegel an die Karosserie geklappt werden, rastet beim Ausstellen aber wieder exakt in der gewünschten Lage ein. Je nach Anordnung bzw. Orientierung der Gelenkachsen läßt sich der Spiegel praktisch in eine Lage parallel zur Karosserie abklappen, rastet aber auch in der abgeklappten Lage fest ein.

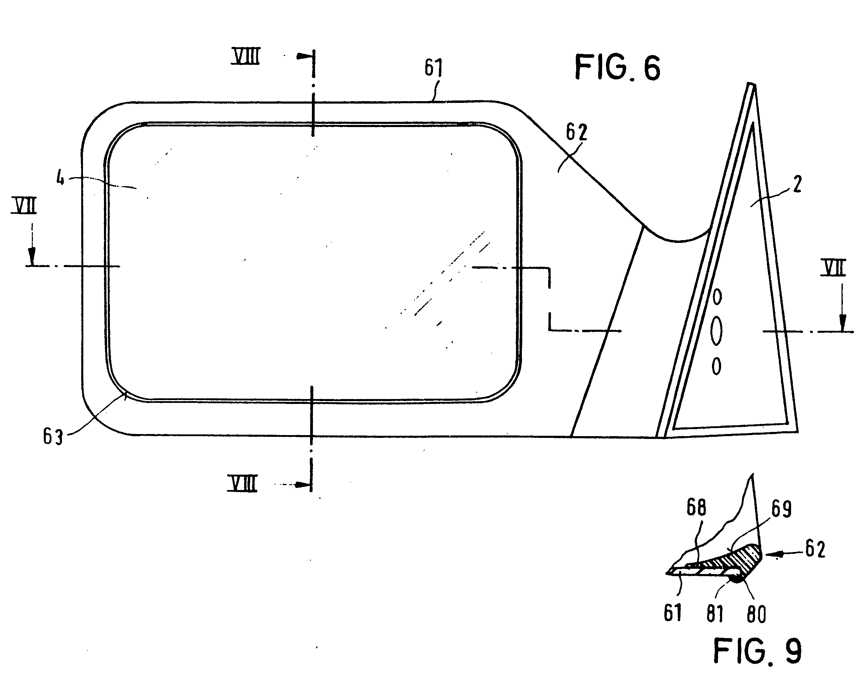

Der in Fig. 6 bis 9 dargestellte Außenrückblickspiegel weist wiederum ein aus Kunststoff gespritztes, wannenartig ausgebildetes Gehäuse 61 auf, dessen Vorderseite von einer Dichtung 62 gebildet ist, welche eine Öffnung 63 umschließt, in der die Spiegelscheibe 4 verstellbar angeordnet ist.

Das Gehäuse 61 ist mittels des oben beschriebenen Gelenkes 8 mit dem Fuß 2 verbunden, der zum Anbringen des Außenrückblickspiegels an der Karosserie 52 eines nicht näher dargestellten Fahrzeuges dient.

Die Dichtung 62 weist einen die Öffnung 63 umschließenden, in das Innere des Gehäuses 61 ragenden Flansch 68 auf, der auf den Umfang betrachtet eine unterschiedliche Stärke hat und mit einer balligen Innenwand 69 versehen ist, deren Zentrum sich im Mittelpunkt einer Kugel 70 befindet, die am äußeren Ende eines an der Innenseite des Gehäuses 61 befestigten und mit dem Gehäuse zweckmäßig aus einem Stück bestehenden Stempels 71 angeordnet ist. Dieser Stempel 71 ist über in das aus Kunststoff gespritzte Gehäuse 61 eingespritzte Rippen 72, 73, 74 und 75 seitlich abgestützt.

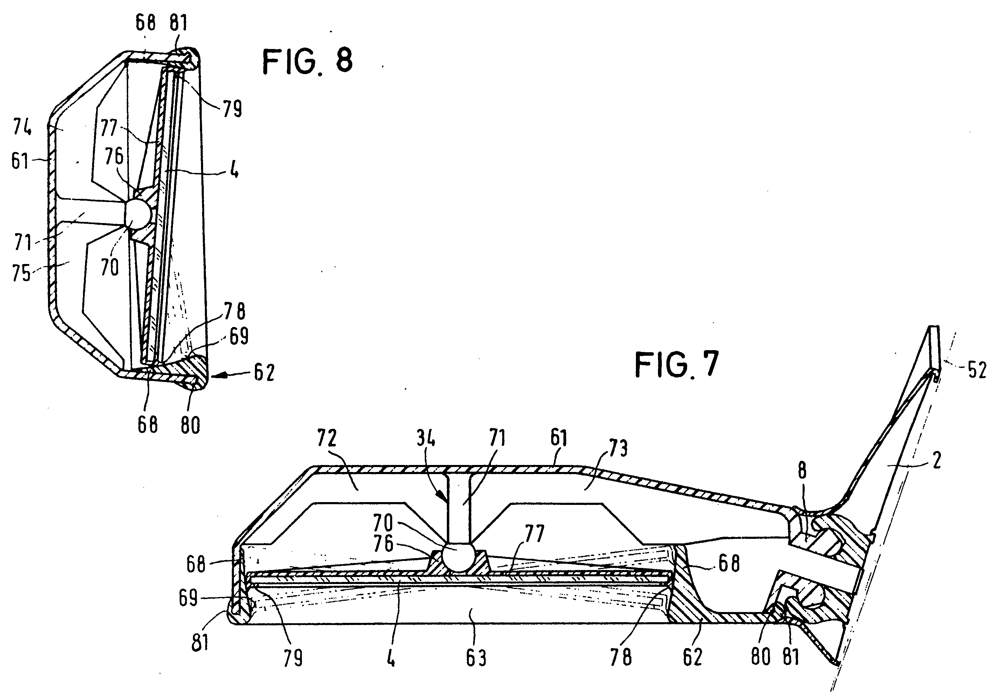

Auf die Kugel 70 ist eine Gelenkpfanne 76 aufgesteckt, die sich im Zentrum an der Rückseite einer rahmenartigen Fassung 77 befindet, welche ebenfalls aus Kunststoff gespritzt sein kann und in ihrer Vorderseite die Spiegelscheibe 4 aufnimmt. Aus Fig. 7 und 8 ist erkennbar, daß die Fassung 77 eine vorstehende umlaufende Dichlippe 78 hat, welche flexibel sein kann und sich mit Reibungsschluß gegen die Innenwand 69 des nach innen vorstehenden Flansches 68 der Dichtung 62 legt und somit die um das aus der Kugel 70 und der Gelenkpfanne 76 gebildete zentrale Gelenk 34 verschwenkbare Fassung 77 mit darin untergebrachter Spiegelscheibe 4 in der jeweils eingestellten Lage hält und gleichzeitig die Öffnung 63 zum Inneren des Gehäuses 61 abdichtet. Außerdem ist die Fassung 77 mit einem nach innen vorstehenden Rand 79 versehen, welcher die Spiegelscheibe 4 in der Fassung hält.

Die verschiedenen Winkellagen der Fassung 77 mit darin untergebrachter Spiegelscheibe 4 sind in Fig. 7 und 8 in strichpunktierten Linien angedeutet. Die in vollen Linien gezeigte Lage ist eine beliebige der vielen möglichen Betriebspositionen der Fassung 77 bzw. der Spiegelscheibe 4.

Die Dichtung 62 ist formschlüssig auf das Gehäuse 61 aufgesteckt, welch letzteres zu diesem Zweck am äußeren Rand eine nach außen vorstehende Nase 80 aufweist, über die ein äußerer umlaufender Flansch 81 der Dichtung 62 greift.

Die in Fig. 9 dargestellte alternative Ausführungsform der Dichtung 62 zeigt, daß die Dichtung verschiedene Querschnittsformen haben kann, ohne daß sich bezüglich des Reibungsschlusses zwischen der Dichtung 62 und der Fassung 77 der Spiegelscheibe 4 etwas ändert, d.h. auch bei unterschiedlichen Querschnittsformen der Dichtung 62 wird die Fassung 77 mit der darin untergebrachten Spiegelscheibe 4 stets in der jeweils eingestellten Schwenklage gehalten, wobei gleichzeitig die Öffnung 63 des Gehäuses 61 abgedichtet ist.

Ein weiterer Vorteil besteht darin, daß die Spiegelscheibe 4 aufgrung der Verstellbewegungen keine Beanspruchungen erfährt, die zu einem Bruch führen können, weil sie von der Fassung 77 sozusagen bruchsicher aufgenommen ist.

**Patentansprüche**

1. Außenrückblickspiegel, insbesondere für Kraftfahrzeuge, mit einem Gehäuse (1; 61) für eine darin untergebrachte verstellbare Spiegelscheibe (4) und einer Halterung zum Anbringen am Fahrzeug, die ein nach außen geschütztes doppeltes Gelenk (8) mit zwei zueinander parallen, drehfest an einem Block (10) angebrachten und lösbar in Drehbewegungen zulassende Öffnungen (24; 55) eines Scharnierkörpers (9; 37) einrastende Gelenkachsen (13; 42), von denen jeweils eine unter Einwirkung einer auf das Gehäuse (1; 61) ausgeübten Stoßkraft von ihrem zugehörigen Scharnier lösbar ist, während die andere in ihrem Scharnier verbleibt, enthält, dadurch gekennzeichnet, daß jede Gelenkachse (13; 42) einen flechen Abschnitt (15; 45) mit zwei parallel zueinander verlaufenden, bogenförmig ausgebildeten Seitenwänden (16 und 17) und auf einem Kreisbogen liegenden Stirnwänden (18 und 19) aufweist und der Scharnierkörper (9; 37) als Scharnier für jeden dieser Abschnitte eine zylindrische Öffnung (24; 55) enthält, wobei die Krümmungen der Abschnitte (15; 45) der benachbarten Gelenkachsen entgegengesetzt und konvex zueinander angeordnet sind und die jedem Abschnitt zugeordnete Öffnung des Scharnierkörpers einen entsprechend bogenförmig ausgebildeten radialen Schlitz (25; 56), durch den der abgeflachte Abschnitt einer Gelenkachse hindurchtreten kann, enthält, und daß der Rand der Spiegelscheibe (4) an einer sie umschließenden Dichtung (62) anliegt.

2. Außenrückblickspiegel nach Anspruch 1, dadurch gekennzeichnet, daß die Schlitze (25; 56) eine derartige Weite haben, daß eine Mindestkraft erforderlich ist, um einen abgeflachten Abschnitt (15; 45) durch einen Schlitz (25; 56) hindurchzuführen.

3. Außenrückblickspiegel nach Anspruch 1, dadurch gekennzeichnet, daß die Gelenkachsen (42) im mittleren Bereich einen asymmetrischen Querschnitt mit einer nach außen weisenden Nase (146) haben und der Scharnierkörper (37) diese Nasen übergreifende Flanken (43) aufweist, die jeweils an ihrer Innenwand zwei Rasten (144, 145) enthalten.

4. Außenrückblickspiegel nach Anspruch 3, dadurch gekennzeichnet, daß die Flanken (43) des Scharnierkörpers (37) federnd ausgebildet sind.

5. Außenrückblickspiegel nach Anspruch 3 oder 4, dadurch gekennzeichnet, daß der Scharnierkörper (37) einen mittleren Teil aus Kunststoff aufweist, auf dessen beide Enden jeweils eine vorzugsweise aus Metall bestehende Abdeckung (46) aufgesetzt ist, wobei die beiden Abdeckungen zylindrische Sacklöcher (55) mit nach außen führenden gebogenen radialen Schlitzen (56) zur Aufnahme der abgeflachten Abschnitte (45) der beiden Gelenkachsen (42) enthalten.

6. Außenrückblickspiegel nach einem der Ansprüche 3 bis 5, dadurch gekennzeichnet, daß der Scharnierkörper (37) und ein mit den Gelenkachsen verbundener Halter (57) jeweils eine Durchgangsöffnung (50, 51) enthalten, wobei beide Durchgangsöffnungen in der normalen Stellung des Gelenks (8) miteinander fluchten.

7. Außenrückblickspiegel nach Anspruch 1, dadurch gekennzeichnet, daß der Rand der Gehäuseöffnung (63) als Dichtung (62) mit balliger Innenwand (69) ausgebildet ist und die Außenkante der Spiegelscheibe (4) mit Reibungsschluß umschließt und daß die Spiegelscheibe (4) um ein an der Rückseite des Gehäuses (61) in diesem angebrachtes Gelenk (70, 76) verschwenkbar gelagert ist.

8. Außenrückblickspiegel nach Anspruch 7, dadurch gekennzeichnet, daß die Spiegelscheibe (4) in einer Fassung (77) angeordnet ist, deren Umfangskante als flexible Dichtlippe (78) ausgebildet ist und an der Innenwand (69) der Dichtung (62) reibend anliegt.

9. Außenrückblickspiegel nach Anspruch 7, dadurch gekennzeichnet, daß die die Öffnung (63) enthaltende Seite des Gehäuses (61) von der Dichtung (62) gebildet und diese auf das Gehäuse (61) aufgesteckt ist.

## Revendications

1. Rétroviseur extérieur, en particulier pour véhicules moteur, comprenant un boîtier (1; 61) avec une glace (4) réglable incorporée et un support de fixation sur le véhicule, comportant une articulation double (8) à protection extérieure et comprenant deux axes articulés (13; 42) attachés en parallèle et anti-rotatif sur un bloc (10) et s'enclenchant de manière amovible dans des ouvertures (24; 55) d'un corps à charnière (9; 37) permettant des movements rotatifs, chacun des axes étant individuellement détachable de sa charnière sous l'influence d'un impact exercé sur le boîtier (1; 61) tandis que l'autre reste dans sa charnière, caractérisé en ce que chacun des axes articulés (13; 42) est pourvu d'une section plate (15; 45) comportant deux parois latérales (16 et 17) circulaires parallèles et deux parois avant (18 et 19) situées sur un arc de cercle et que le corps à charnière (9; 37) comporte en tant que charnière pour chacune de ces sections une ouverture cylindrique (24; 55), les courbes des sections (15; 45) des axes articulés adjacents étant arrangés en direction opposée et convergeant l'un par rapport à l'autre, les ouvertures du corps à charnière affectées à chacune des sections étant pourvues d'une fente radiale (25; 26) de forme circulaire correspondante et pouvant être traversée par la section plate d'un axe articulé, et que le bord de la glace (4) s'appuie sur un joint (62) l'enfermant.

2. Rétroviseur extérieur suivant la revendication 1, caractérisé en ce que les fentes (25; 56) présentent une largeur telle qu'une force minimale est nécessaire pour glisser une section plate (15; 45) à travers une fente (25; 56).

3. Rétroviseur extérieur suivant la revendication 1, caractérisé en ce que dans leur partie médiane les axes articulés (42) présentent une section asymétrique pourvue d'un ergot (146) pointant vers l'extérieur et que le corps à charnière (37) est équipé de flancs (43) couvrant les ergots et que les flancs sont équipés sur leur paroi intérieure de deux crans (144, 145).

4. Rétroviseur extérieur suivant la revendication 3, caractérisé en ce que les flancs (43) du corps à charnière (37) sont de conception élastique.

5. Rétroviseur extérieur suivant l'une des revendications 3 ou 4, caractérisé en ce que le corps à charnière (37) comporte une partie médiane en matière synthétique dont les deux extrémités sont couvertes d'un revêtement (46) de préférence métallique, ces deux revêtements comportant des trous borgnes cylindriques (55) pourvus de fentes courbes radiales (56) s'étendant vers l'extérieur et destinées à reprendre les sections plates (45) des deux axes articulés.

6. Rétroviseur extérieur suivant l'une revendications 3 à 5, caractérisé en ce que le corps à charnière (37) et un support (57) lié aux axes articulés comportent chacun un passage (50; 51), ces deux passages étant alignés l'un par rapport à l'autre en position normale de l'articulation (8).

7. Rétroviseur extérieur suivant la revendication 1, caractérisé en ce que le bord de l'ouverture du boîtier (63) est conçu comme joint (62) à paroi intérieure bombée (69) renfermant sans frottement le bord extérieur de la glace (4) et que la glace (4) est pivotée autour d'une articulation (70; 76) intégrée dans la face arrière du boîtier (61).

8. Rétroviseur extérieur suivant la revendication 7, caractérisé en ce que la glace (4) est encastrée dans un encastrement (77) dont la circonférence est conçue comme joint à lèvre flexible (78) s'appuyant sur la paroi intérieure (69) du joint (62).

9. Rétroviseur extérieur suivant la revendication 7, caractérisé en ce que la paroi du boîtier (61) comportant l'ouverture (63) est formée par le joint (62) et que le joint (62) est glissé sur le boîtier (61).

## Claims

1. Exterior rear-view mirror, in particular for motor vehicles, comprising a housing (1; 61) with an integrated adjustable mirror (4) and a support for attachment to the vehicle provided with an exteriorly protected double articulation (8) com-prising a pair of parallel hinged shafts (13; 42) frictionally attached to a block (10) and releasably engaging rotational movement allowing apertures (24; 55) of a hinge body (9; 37), said hinged shafts (13; 42) being individually releasable from their hinge under the influence of an impact exerted on housing (1; 61) while the other remains in its hinge, characterized in that each hinged shaft (13; 42) is provided with a flat section (15; 45) comprising a pair of parallely extending lateral walls (16 and 17) and a pair of front walls (18 and 19) provided on a circular arc and that the hinge body (9; 34) comprises as hinge for each of these sections a cylindrical aperture (24; 55), the curves of said sections (15; 45) of adjacent hinged shafts being arranged in opposite directions and converging towards one another, each aperture of the hinge body attributed to each individual section containing a circular radial slot (25; 56) through which may extend the flattened section of a hinged shaft and that the rim of mirror (4) applies to a surrounding seal (62).

2. Exterior rear-view mirror as defined in claim 1, characterized in that the width of slots (25; 56) is such that minimum force is required to push a flattened section (15; 45) through one of slots (25; 56).

3. Exterior rear-view mirror as defined in claim 1, characterized in that in their center portion the hinged shafts (42) are provided with an asymmetrical section carrying an outward extending projection (146) and that hinge body (37) is provided with flanks (43) overlapping said projections and provided at their inner wall with a pair of notches (144; 145).

4. Exterior rear-view mirror as defined in claim 3, characterized in that flanks (43) of hinge body (37) are designed resilient.

5. Exterior rear-view mirror as defined in either of claims 3 or 4, characterized in that hinge body (37) is provided with a center portion made of synthetic material, both ends of which are provided with a cover (46) preferably made of metal, said covers comprising cylindrical blind holes (55) with outward extending curved radial slots (56) for taking up the flattened sections (45) of both hinged shafts (42).

6. Exterior rear-view mirror as defined in either of claims 3 to 5, characterized in that hinge body (37) as well as a support (57) connected to the hinged shafts each comprise a passage (50; 51), both of said passages being aligned in normal position of articulation (8).

7. Exterior rear-view mirror as defined in claim 1, characterized in that the rim of the housing aperture (63) is designed as seal (62) with sperical inner wall (69) frictionally enclosing the outer rim of mirror (4) and that mirror (4) is rotationally supported by an articulation (70; 76) integrated in the rear wall of housing (61).

8. Exterior rear-view mirror as defined in claim 7, characterized in that mirror (4) is arranged in a mounting frame (77), the circumference of which is designed as flexible packing washer (78) frictionally applying to the inner wall (69) of seal (62).

9. Exterior rear-view mirror as defined in claim 7, characterized in that the wall of housing (61) comprising aperture (63) is formed by seal (62) mounted on housing (61).

FIG. 1

FIG. 2

FIG. 3

2

FIG. 4

FIG. 5

# FIG. 6

VIII

61

62

VII

4

VII

2

VIII

63

VIII

0 003 608

68          69

62

61    81    80

# FIG. 9

FIG. 8

FIG. 7

0 003 608